# FASCICULE DE BREVET EUROPEEN

(11) **EP 0 886 732 B1**
(45) Date de publication et mention de la délivrance du brevet: **04.09.2002**
(21) Numéro de dépôt: 97908312.8
(22) Date de dépôt: 06.03.1997
(51) Int. Cl.: F15C 1/22, G01F 1/32

(54) **OSCILLATEUR FLUIDIQUE COMPORTANT UN OBSTACLE A PROFIL AMELIORE**
STAUPLATTE MIT VERBESSERTEM PROFIL FÜR EINEN FLUIDOSZILLATOR
FLUIDIC OSCILLATOR COMPRISING AN OBSTACLE WITH IMPROVED PROFILE

(30) Priorité: 15.03.1996 FR 9603315
(43) Date de publication de la demande: 30.12.1998
(73) Titulaire: SCHLUMBERGER INDUSTRIES S.A., 92120 Montrouge (FR)
(72) Inventeur: PARRY, Andrew, F-92160 Antony (FR); HOCQUET, Philippe, F-92170 Vanves (FR)
(74) Mandataire: Feray, Valérie
(86) Numéro de dépôt international: FR9700397
(87) Numéro de publication internationale: WO97035116

(56) Documents cités:
- FR-A- 2 690 717
- FR-A- 2 690 739

## Description

L'invention est relative à un oscillateur fluidique symétrique par rapport à un plan de symétrie longitudinal, et qui comprend une ouverture d'entrée de fluide apte à former un jet de fluide bidimensionnel oscillant transversalement par rapport audit plan, un obstacle possédant une paroi frontale dans laquelle est pratiquée une cavité située vis-à-vis de ladite ouverture d'entrée de fluide et qui est balayée par le jet en oscillation.

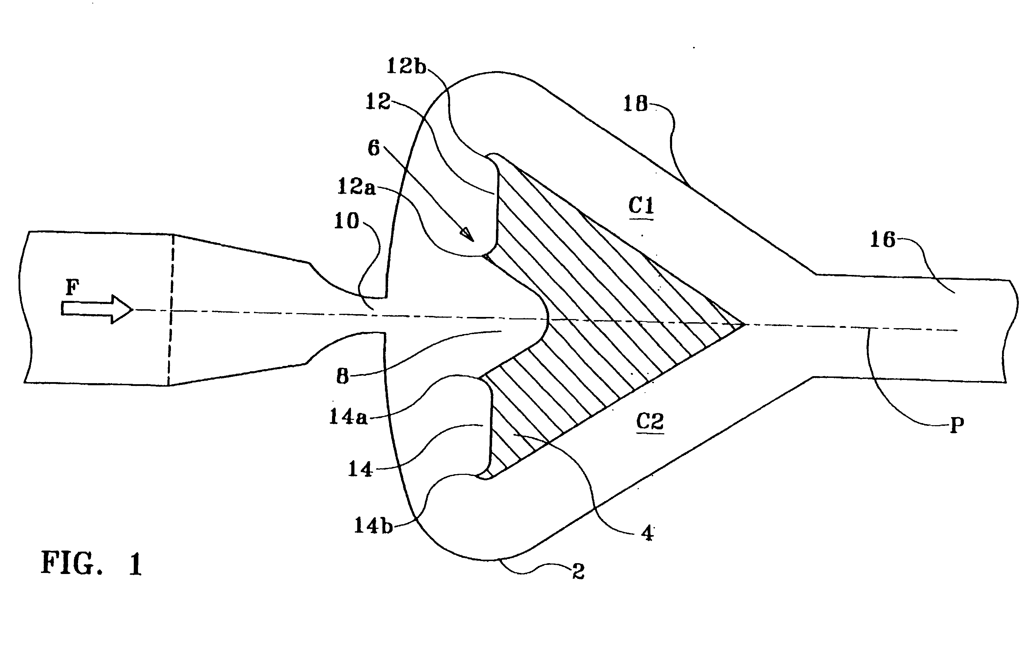

On connaît déjà d'après le document FR 2690717 un tel oscillateur fluidique qui est représenté en vue de dessus sur la figure 1.
Cet oscillateur 1 comprend unes chambre d'oscillation 2 et un obstacle 4 logé à l'intérieur de celle-ci. L'obstacle 4 possède une paroi frontale 6 dans laquelle est pratiquée une cavité dite principale 8 qui est située en vis-à-vis d'une fente 10.
La fente 10 définit une entrée de fluide dans la chambre d'oscillation 2 et est apte à former un jet de fluide bidimensionnel qui oscille transversalement par rapport au plan de symétrie longitudinal P.
Le jet de fluide balaye alternativement la cavité principale 8 au cours de son oscillation.
L'obstacle 4 possède en outre dans sa partie frontale 6 deux cavités dites secondaires 12 et 14 situées de part et d'autre de la cavité principale 8. Ces cavités secondaires 12, 14 sont disposées en vis-à-vis des parois dites frontales de la chambre d'oscillation qui encadrent la fente 10 et sont délimitées par des éléments en forme de pointes 12a, 12b et 14a, 14b.
La cavité principale possède une forme arrondie dans sa partie qui est la plus éloignée de la fente et, en se rapprochant de la fente, les bords de ladite cavité vont en s'évasant (Fig.1).
Lorsque le jet de fluide rencontre la cavité principale et balaye celle-ci, des tourbillons se forment de part et d'autre du jet et sont alternativement forts et faibles, en opposition de phase et en relation avec l'oscillation dudit jet.
Ces tourbillons se déforment au cours de l'oscillation du jet et les cavités secondaires 12 et 14 ont pour fonction de rendre l'extension radiale des tourbillons dépendante du régime d'écoulement du jet, l'extension radiale étant la distance entre le centre du tourbillon considéré et son périmètre.

L'obstacle 4 définit avec les parois dites latérales de la chambre d'oscillation 2 deux canaux C1 et C2 qui permettent l'écoulement du fluide vers l'aval de l'oscillateur fluidique, en direction d'une sortie 16.

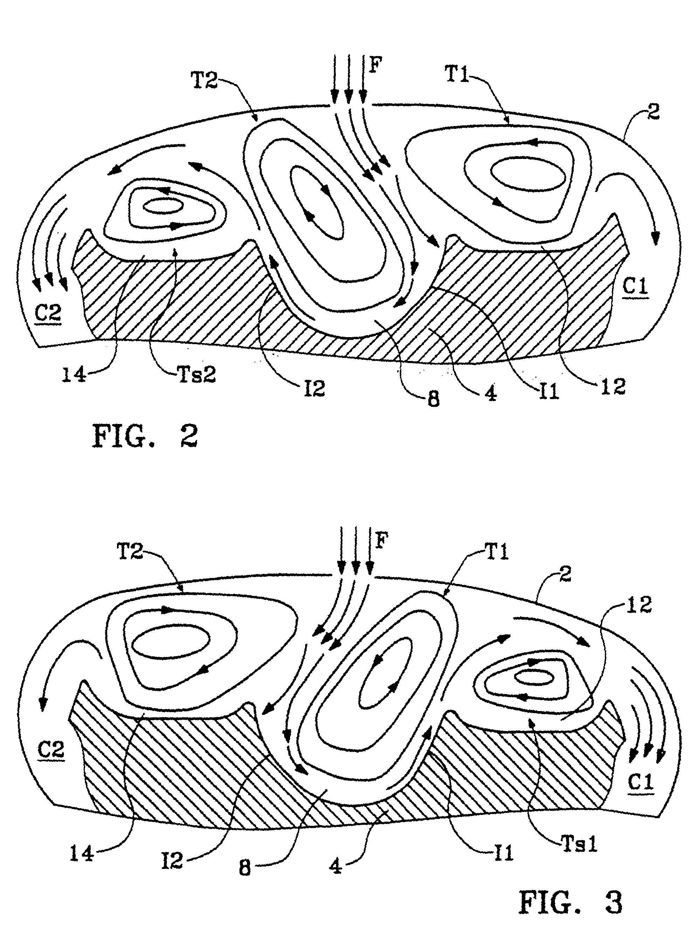

La description qui suit concerne le fonctionnement général de l'oscillateur fluidique en régime de transition faite en référence aux figures 2 et 3.

L'impact du jet de fluide F balaye la cavité principale 8 entre les points extrêmes I1 et I2. L'oscillation s'accompagne de la formation des tourbillons principaux T1 et T2 localisés entre la partie frontale 6 de l'obstacle 4 et les parois de la chambre d'oscillation 2 raccordée à la fente 10.
Sur la figure 2, l'impact du jet atteint le point I1, le tourbillon T1 est alors concentré et fort tandis que le tourbillon T2 est faible. Le jet de fluide s'échappe principalement par le canal C2.
En régime turbulent, les deux cavités secondaires 12, 14 sont remplies par des tourbillons secondaires Ts1 et Ts2 alternativement forts et faibles, en opposition de phase avec les tourbillons principaux. Mais plus le débit diminue, plus l'intensité ou la concentration de ces tourbillons secondaires diminue.
Il en résulte que le tourbillon principal fort, en l'occurrence T1 sur la figure 2, voit son extension radiale augmenter, de sorte que lorsqu'on diminue le débit, il occupe progressivement la cavité secondaire 12 au détriment du tourbillon secondaire Ts1 qui finit par disparaître totalement.
Par contre, le tourbillon secondaire Ts2 créé par l'échappement du jet de fluide est toujours présent dans la cavité secondaire 14.
Sur la figure 3, l'impact du jet de fluide est situé en I2; c'est alors le tourbillon T2 qui présente une extension radiale augmentée, le tourbillon secondaire Ts2 disparaissant totalement lorsque le débit est suffisamment abaissé. Les tourbillons principaux lorsqu'ils sont concentrés et forts possèdent une extension radiale supérieure en régime de transition à celle qu'ils possèdent en régime turbulent (puisque dans ce dernier régime les cavités secondaires sont toutes les deux occupées par des tourbillons secondaires, l'espace disponible au développement des tourbillons principaux est réduit). La fréquence d'oscillation est d'autant plus faible que l'extension radiale des tourbillons principaux forts est grande.

Ainsi, cet oscillateur fluidique possède, par rapport aux autres oscillateurs fluidiques connus précédemment, une fréquence d'oscillation augmentée en régime d'écoulement turbulent et une fréquence diminuée en régime de transition et donc une linéarité améliorée.
Néanmoins, cet oscillateur fluidique présente des problèmes de répétabilité des mesures en raison de la présence des éléments en forme de pointes 12a, 12b, 14a et 14b.
En effet, il n'est pas aisé, lors de la fabrication, de reproduire avec une précision constante les cavités secondaires, et les écarts obtenus d'un oscillateur fluidique à l'autre ont conduit à des courbes de calibration dont la linéarité s'est révélée insuffisante pour les applications envisagées.

La présente invention vise ainsi à remédier à ce problème tout en proposant un oscillateur fluidique dont les performances restent sensiblement les mêmes que celles de l'oscillateur décrit dans le document FR 2690717.

La présente invention a ainsi pour objet un oscillateur fluidique symétrique par rapport à un plan de symétrie longitudinal, comprenant une ouverture d'entrée de fluide apte à former un jet de fluide bidimensionnel oscillant transversalement par rapport au plan de symétrie, un obstacle dans lequel est pratiquée une cavité située en vis-à-vis de ladite ouverture d'entrée de fluide et qui est balayée par le jet en oscillation, caractérisé en ce que l'obstacle possède une paroi frontale qui comprend deux surfaces dites frontales essentiellement planes encadrant la cavité, le plan de chaque surface étant sensiblement perpendiculaire au plan de symétrie, ladite cavité étant définie par une surface qui est sensiblement parallèle audit plan de symétrie aux endroits où ladite surface rejoint chacune desdites surfaces frontales, l'obstacle possédant également deux parois latérales dont les surfaces dites latérales sont sensiblement parallèles au plan de symétrie aux endroits où chacune d'entre elles rejoint la surface frontale correspondante.

La nouvelle configuration simplifiée de l'oscillateur fluidique selon l'invention permet d'obtenir des tourbillons principaux dont l'extension radiale (distance entre le centre du tourbillon et sa périphérie) croit avec le nombre de Reynolds, contribuant ainsi à réduire la fréquence d'oscillation du jet.
De cette manière, les performances du nouvel oscillateur fluidique sont sensiblement les mêmes que celles de l'oscillateur de l'art antérieur décrit dans le brevet FR 2 690 717.

La configuration de cet oscillateur fluidique permet aux tourbillons de se développer de manière plus libre que dans l'oscillateur de l'art antérieur où les cavités secondaires imposent des contraintes géométriques aux tourbillons en fonction du régime d'écoulement du jet.
Dans l'oscillateur fluidique de l'art antérieur, en régimes laminaire et turbulent, les cavités secondaires sont toutes les deux occupées par des tourbillons secondaires en plus de la présence des tourbillons principaux alors que, dans l'oscillateur selon la présente invention, seuls les tourbillons principaux occupent l'espace situé entre la partie frontale de l'obstacle et l'ouverture d'entrée de fluide.
Dans l'oscillateur fluidique de l'art antérieur, en régime de transition la taille des tourbillons principaux est augmentée par rapport à celle des mêmes tourbillons dans les régimes de laminaire et de turbulence.
Le fait d'avoir supprimé les cavités secondaires, et donc les éléments en forme de pointes qui délimitent ces cavités, rend l'oscillateur fluidique plus simple à fabriquer et à reproduire avec une précision constante.
Selon une caractéristique de l'invention, la surface de la cavité est profilée de manière à guider le jet de fluide dans ladite cavité et à empêcher la création d'un phénomène de recirculation dans celle-ci qui risquerait de perturber l'oscillation du jet.

Selon une autre caractéristique de l'invention, l'oscillateur fluidique comprend une chambre d'oscillation raccordée à l'ouverture d'entrée de fluide et dans laquelle est logé l'obstacle. La chambre d'oscillation possède des parois situées en regard des surfaces frontales, de part et d'autre de l'ouverture d'entrée de fluide, et dont les surfaces sont sensiblement parallèles auxdites surfaces frontales.

Cette caractéristique contribue également au contrôle de la taille des tourbillons.

Selon encore une autre caractéristique de l'invention, l'obstacle possède une paroi dite arrière définie par une surface dite arrière qui est sensiblement perpendiculaire au plan de symétrie longitudinal P.

D'autres caractéristiques et avantages apparaîtront au cours de la description qui va suivre, donnée uniquement à titre d'exemple et faite en référence aux dessins annexés sur lesquels :
- la figure 1 est une vue de dessus d'un oscillateur fluidique de l'art antérieur,
- les figures 2 et 3 représentent schématiquement une vue partielle de dessus de l'oscillateur fluidique représenté à la figure 1 en fonctionnement en régime de transition à deux instants différents,
- la figure 4 est une vue de dessus d'un oscillateur fluidique selon un mode de réalisation de l'invention,
- les figures 5a et 5b représentent les courbes de calibration obtenues pour l'oscillateur fluidique de l'art antérieur et celui de l'invention,
- les figures 6a, 6b et 6c représentent schématiquement une vue partielle de dessus de l'oscillateur fluidique représenté à la figure 4 en fonctionnement pour les régimes d'écoulement laminaire, de transition et turbulent.
Comme représenté à la figure 4 et désigné par la référence générale notée 20, un oscillateur fluidique est utilisé en relation avec un écoulement de gaz afin de déterminer le débit et le volume du gaz ayant traversé ledit oscillateur.
L'oscillateur fluidique 20 est symétrique par rapport à un plan de symétrie longitudinal P suivant lequel sont alignées une entrée 22 et une sortie 24 pour l'écoulement de gaz.
L'entrée 22 est réalisée sous la forme d'une fente de dimension transversale, ou largeur, constante d et dont la plus grande dimension, sa hauteur, est contenue dans un plan perpendiculaire au plan de la figure 4.
Cette fente transforme l'écoulement de gaz qui la traverse et qui est repéré par la flèche F en un jet de fluide bidimensionnel (le jet de fluide reste à peu près le même suivant la direction parallèle à la hauteur de la fente) qui oscille transversalement par rapport au plan de symétrie longitudinal P.
L'oscillateur fluidique 20 comprend une chambre dite d'oscillation 26 dans laquelle débouche le jet de gaz par la fente 22 et au milieu de laquelle est positionné un obstacle 28 qui occupe la majeure partie de cette chambre.
La chambre d'oscillation 26 définit par ses parois latérales 26a et 26b avec les parois de l'obstacle 28 deux canaux C1 et C2 qui permettent à l'écoulement de gaz de s'échapper alternativement par l'un ou l'autre canal vers la sortie 24 de l'oscillateur fluidique.
L'obstacle 28 possède une paroi frontale 30 en regard de la fente 22 et dans laquelle est pratiquée une cavité 32 située en vis-à-vis de ladite fente et qui est balayée par le jet de gaz au cours de son mouvement d'oscillation.
Le jet se sépare en deux écoulements après avoir heurté la cavité.
La cavité 32 présente, dans le plan de la figure 4, une surface dont le profil permet de guider le jet de gaz dans ladite cavité au cours de son oscillation.

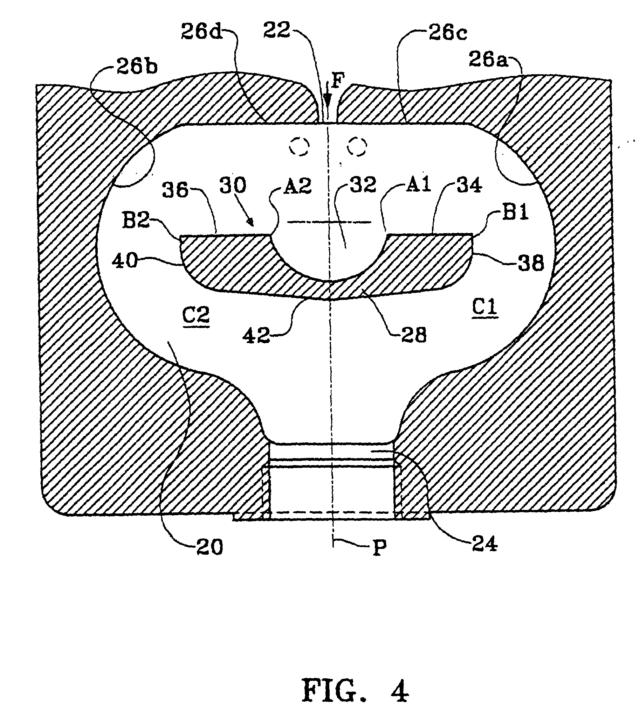

Pour ce faire, la surface doit être courbe et la cavité ne doit pas être trop profonde sans quoi le jet ne pourrait être guidé jusqu'au fond de celle-ci.
Par ailleurs, la surface doit être profilée pour empêcher toute création d'un phénomène de recirculation à l'intérieur de la cavité ce qui serait le cas si la cavité présentait des angles obtus à sa surface.
La forme la plus simple est représentée sur la figure 4 et correspond à un demi-cercle.
Toutefois, d'autres formes conviennent également pourvu qu'elles remplissent les fonctions citées ci-dessus.
Par exemple, le profil de la surface peut être parabolique.
La paroi frontale 30 de l'obstacle 28 comprend également deux surfaces, appelées surfaces frontales 34 et 36, qui sont situées symétriquement de part et d'autre de la cavité 32 et qui sont essentiellement planes.
Le plan dans lequel sont disposées ces surfaces frontales est sensiblement perpendiculaire au plan de symétrie longitudinal P et à la direction de l'écoulement au droit de la fente 22.
Toutefois, il n'est pas obligatoire que ces surfaces soient disposées dans un même plan ni même que le plan de chacune d'elles soit strictement perpendiculaire au plan de symétrie P.
La chambre d'oscillation 26 comprend également deux parois 26c et 26d qui sont disposées symétriquement de part et d'autre de la fente 22 en vis-à-vis des surfaces frontales 34 et 36.
Les parois 26c et 26d possèdent des surfaces qui sont parallèles aux surfaces frontales 34 et 36.
Les tourbillons qui vont se former de part et d'autre du jet vont être positionnés entre les surfaces frontales 34 et 36 et les surfaces correspondantes respectives des parois 26c et 26d. Ces tourbillons vont ainsi se développer de manière quasi libre entre ces surfaces
La forme de la cavité 32 est telle qu'aux endroits A1 et A2 où ladite cavité rejoint les surfaces frontales 34 et 36, la surface de celle-ci est sensiblement parallèle au plan de symétrie longitudinal P.
Ainsi, les écoulements provenant du jet qui s'est séparé en rencontrant la surface de la cavité et qui sont guidés par ladite surface possèdent une direction sensiblement parallèle au plan de symétrie longitudinal au sortir de ladite cavité.
Au contraire, si la forme de la cavité aux endroits A1 et A2 est évasée, l'écoulement est guidé par la surface de la cavité 32 suivant une direction fortement éloignée de celle du plan de symétrie P et le développement des tourbillons risque d'en être perturbé.
En outre, le fait que les surfaces des parois 26c et 26d soient parallèles aux surfaces frontales et que l'écoulement sortant de la cavité 32 a une direction sensiblement perpendiculaire à ces surfaces permet de ne pas communiquer à l'écoulement qui heurte lesdites surfaces des parois 26c et 26d un angle d'incidence trop éloigné de la normale à ces surfaces.
En effet, un angle d'incidence trop éloigné de la normale à ces surfaces aurait pour conséquence de modifier la taille du tourbillon positionné entre cette surface frontale et la surface en regard correspondante de la paroi 26c et 26d.
L'obstacle possède deux parois latérales 38 et 40 qui sont en communication respectivement avec les canaux C1 et C2.
Ces parois 38 et 40 présentent des surfaces dites latérales, essentiellement planes, qui sont sensiblement parallèles au plan de symétrie longitudinal P aux endroits B1 et
B2 où chacune d'entre elles rejoint respectivement l'une des surfaces frontales correspondantes 34 et 36.
Ceci permet de bien définir la direction de sortie de l'écoulement et d'éviter un phénomène de recirculation d'écoulement qui risquerait de prendre naissance si l'angle entre les surfaces latérales 38, 40 de l'obstacle 28 et la direction longitudinale du plan de symétrie était bien supérieur à zéro ou si la zone de jonction entre l'une des surfaces latérales et la surface frontale correspondante formait une courbe.
Dans de tels cas, la formation des tourbillons risquerait également d'être perturbée.
Aux points B1 et B2 la zone de jonction est parfaitement définie et reproductible lors d'une fabrication en grande série ce qui fixe précisément l'emplacement de l'arête de détachement de l'écoulement aux différents régimes laminaire, de transition et turbulent.
Par contre, la position de cette arête de détachement de l'écoulement varie en fonction des régimes d'écoulement pour une zone de jonction de forme par exemple convexe. Par conséquent, comme il est difficile de reproduire de manière très fiable une forme convexe, on conçoit que le positionnement précis de l'arête de détachement sera difficile à obtenir.

Ainsi que représenté sur la figure 4, les surfaces latérales des parois 38, 40 de l'obstacle 28 définissent avec les parois latérales 26a et 26b de la chambre 26 deux portions de canaux parallèles entre elles.

L'obstacle 28 possède également une paroi dite arrière 42 qui fait face à la sortie 24 de l'oscillateur fluidique.
Cette paroi arrière 42 est définie par une surface qui est sensiblement perpendiculaire au plan de symétrie longitudinal P dans sa partie centrale.
En fait, pour éviter de créer des zones de recirculation cette surface arrière, symétrique par rapport au plan P, forme un léger arrondi convexe à partir de chacune des surfaces latérales des parois 38, 40 puis forme jusqu'au dit plan P une portion droite légèrement inclinée par rapport aux surfaces frontales 34, 36 de l'obstacle 28.
Le fond de la cavité 32 qui correspond à la partie de ladite cavité qui est la plus éloignée de la fente 22 se situe à une distance de ladite fente qui est comprise entre 4 et 8d, et par exemple est égale à 6,25d.
La dimension longitudinale de l'obstacle 28 entre le fond de la cavité 32 et la surface de la paroi arrière 42, encore appelée épaisseur minimale, est supérieure à 0,05d afin d'assurer une résistance mécanique suffisante et est inférieure à 2d.
La dimension transversale de la cavité 32 est comprise entre 2,5 et 6,5d et par exemple est égale à 4,5d.
Les surfaces frontales 34, 36 sont situées à une distance longitudinale de la fente 22, c'est-à-dire des parois 26c et 26d respectivement, comprise entre 2,25 et 6,25d, et par exemple égale à 4,25d.
Les surfaces frontales 34, 36 ont une dimension transversale ou largeur comprise entre 0,25 et 5d, et par exemple égale à 3,25d.

Grâce à la forme simplifiée de l'oscillateur fluidique selon l'invention, celui-ci est plus simple à fabriquer en série et cela permet ainsi d'assurer la reproductibilité de la forme et donc la répétabilité des mesures.
Par ailleurs, la forme simplifiée de l'oscillateur fluidique selon l'invention présente une résistance accrue aux problèmes de contamination dûs à l'accumulation sur l'oscillateur de poussières transportées par l'écoulement de gaz.
L'oscillateur fluidique de la figure 4 permet la mesure du débit de gaz (ou d'un autre fluide tel que l'eau) qui le traverse grâce à deux prises de pression situées aux points extrêmes de balayage du jet de gaz à l'intérieur de la cavité 32. Ces prises de pression sont reliées à des dispositifs connus qui permettent de mesurer la fréquence d'oscillation du jet. Un étalonnage préalable permet de relier la fréquence au débit.
Les capteurs thermiques ou ultrasonores peuvent également convenir pour mesurer la fréquence d'oscillation du jet.

Ces capteurs peuvent aussi être placés entre la fente 22 et l'obstacle 28 dans la paroi supérieure (non représentée sur la figure 4) qui forme couvercle pour l'oscillateur fluidique, ou même dans la paroi inférieure dudit oscillateur fluidique.
L'emplacement de tels capteurs est indiqué par des ronds en pointillés sur la figure 4.

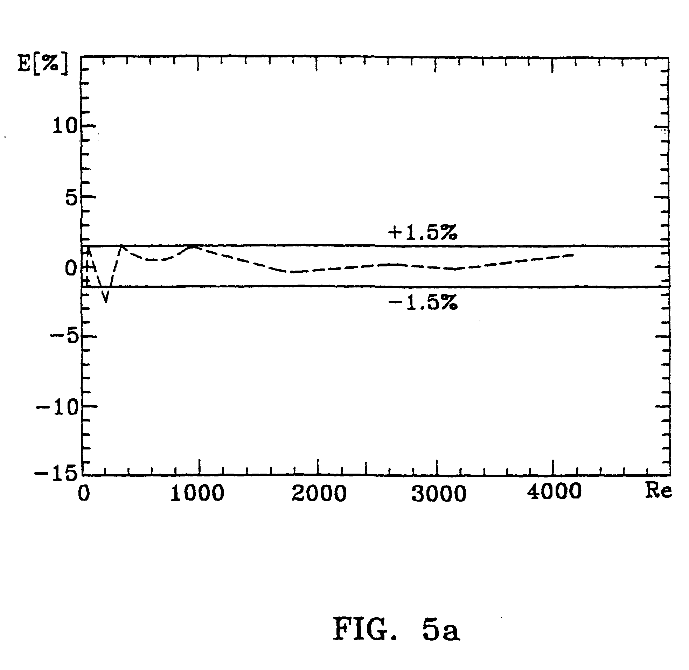

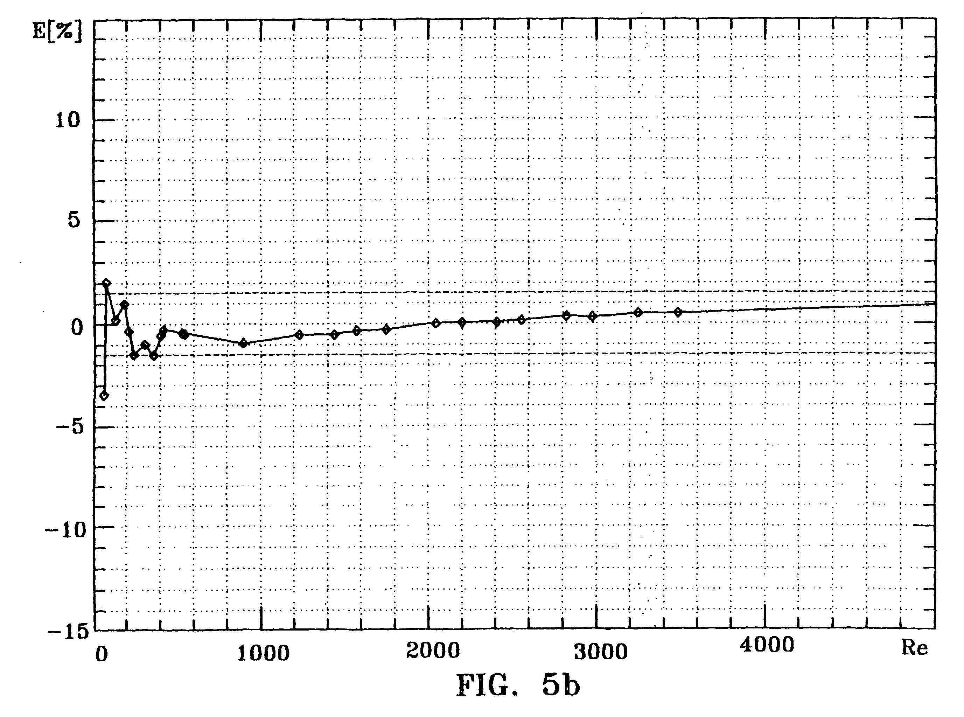

Les courbes représentées sur les figures 5a et 5b montrent des résultats comparables de l'erreur relative E obtenue pour la mesure du débit de gaz en fonction du nombre de Reynolds pour l'oscillateur fluidique de l'art antérieur (Fig.5a) et de l'invention (Fig.5b).

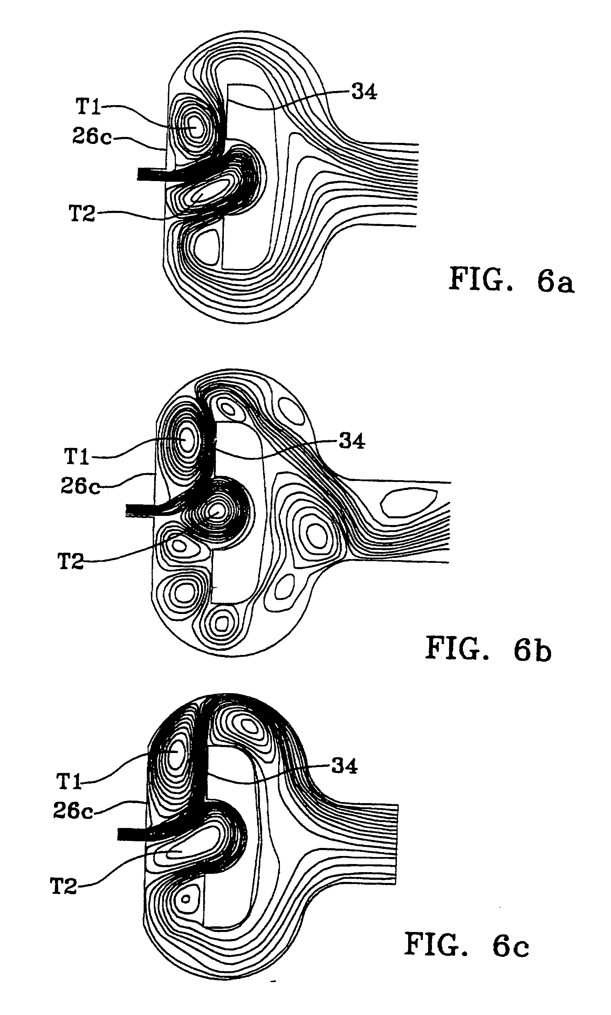

Les figures 6a, 6b et 6c représentent l'oscillateur fluidique de la figure 4 suivant différents régimes de fonctionnement, respectivement en régime laminaire, de transition et turbulent.
Sur chaque figure, l'oscillation du jet a été représentée du même côté pour faciliter la compréhension du phénomène.
Les deux tourbillons principaux T1 et T2 sont situés de part et d'autre du jet lors de son oscillation.
Ainsi, la comparaison de ces trois figures montre clairement qu'en augmentant le nombre de Reynolds, l'extension radiale du tourbillon principal T1 localisé entre la surface frontale 34 et la surface 26c augmente.
Étant donné que la fréquence d'oscillation du jet est proportionnelle au rapport de la vitesse de rotation du tourbillon sur son extension radiale, on comprend que l'extension augmente et que la vitesse maximale du jet diminue lorsque le nombre de Reynolds augmente, rendant ainsi la fréquence constante.

## Revendications

1. Oscillateur fluidique (20) symétrique par rapport à un plan de symétrie longitudinal (P), comprenant une ouverture d'entrée de fluide (22) apte à former un jet de fluide bidimensionnel oscillant transversalement par rapport au plan de symétrie (P), un obstacle (28) dans lequel est pratiquée une cavité (32) située en vis-à-vis de ladite ouverture d'entrée de fluide (22) et qui est balayée par le jet en oscillation, **caractérisé en ce que** l'obstacle (28) possède une paroi frontale (30) qui comprend deux surfaces dites frontales (34, 36) essentiellement planes encadrant la cavité (32), le plan de chaque surface étant sensiblement perpendiculaire au plan de symétrie (P), ladite cavité (32) étant définie par une surface qui est sensiblement parallèle audit plan (P) aux endroits (A1, A2) où ladite surface rejoint chacune desdites surfaces frontales (34, 36), l'obstacle (28) possédant également deux parois latérales (38, 40) dont les surfaces dites latérales sont sensiblement parallèles au plan de symétrie (P) aux endroits (B1, B2) où chacune d'entre elles rejoint la surface frontale correspondante.

2. Oscillateur fluidique selon la revendication 1, dans lequel la surface de la cavité (32) est profilée de manière à guider le jet de fluide dans ladite cavité et à empêcher la création d'un phénomène de recirculation dans celle-ci.

3. Oscillateur fluidique selon la revendication 1 ou 2, dans lequel la surface de la cavité (32) a un profil semi-circulaire dans le plan d'oscillation du jet de fluide.

4. Oscillateur fluidique selon la revendication 1 ou 2, dans lequel la surface de la cavité (32) a un profil sensiblement parabolique dans le plan d'oscillation du jet de fluide.

5. Oscillateur fluidique selon l'une des revendications 1 à 4, comprenant une chambre d'oscillation (26) raccordée à l'ouverture d'entrée de fluide (22) et dans laquelle est logé l'obstacle (28), ladite chambre (26) possédant des parois (26c, 26d) situées en regard des surfaces frontales, de part et d'autre de ladite ouverture d'entrée de fluide (22) et ayant des surfaces sensiblement parallèles auxdites surfaces frontales.

6. Oscillateur fluidique selon l'une des revendications 1 à 5, dans lequel l'obstacle (28) possède une paroi dite arrière (42) définie par une surface dite arrière sensiblement perpendiculaire au plan de symétrie (P).

7. Oscillateur fluidique selon la revendication 5, dans lequel l'obstacle (28) occupe la majeure partie de la chambre d'oscillation (26).

8. Oscillateur fluidique selon l'une des revendications 1 à 7, dans lequel la cavité (32) possède une partie qui est la plus éloignée de l'ouverture d'entrée de fluide (22) de dimension transversale d et qui se situe à une distance de celle-ci comprise entre 4 et 8d.

9. Oscillateur fluidique selon l'une des revendications 1 à 8, dans lequel la dimension transversale de la cavité (32) est comprise entre 2,5 et 6,5d, d étant la dimension transversale de l'ouverture d'entrée de fluide (22).

10. Oscillateur fluidique selon l'une des revendications 1 à 9, dans lequel les surfaces frontales (34, 36) sont situées à une distance longitudinale de l'ouverture d'entrée de fluide (22) de dimension transversale d comprise entre 2,25 et 6,25d.

11. Oscillateur fluidique selon l'une des revendications 1 à 10, dans lequel la dimension longitudinale entre la partie de la cavité (32) qui est la plus éloignée de l'ouverture d'entrée de fluide (22) et une paroi dite arrière (42) de l'obstacle est comprise entre 0,05 et 2d, d étant la dimension transversale de l'ouverture d'entrée de fluide (22).

12. Oscillateur fluidique selon l'une des revendications 1 à 11, dans lequel les surfaces frontales (34,36) ont une dimension transversale comprise entre 0,25 et 5d, d étant la dimension transversale de l'ouverture d'entrée de fluide (22).

## Claims

1. Fluidics oscillator (20) symmetrical with respect to a longitudinal plane of symmetry (P), and which comprises an entry port (22) for the fluid which creates a two dimensional fluid jet oscillating transversally with respect to the said plane of symmetry (P), an obstacle (25) in which is formed a cavity (32) situated opposite the said fluid entry port (22) and which is swept by the oscillating jet, **characterised by** the presence of an obstacle (28) with a forward facing wall (30) which comprises two so called forward facing essentially flat surfaces (34,36) surrounding the cavity (32), the plane of each surface being essentially perpendicular to the plane of symmetry (P), the said cavity (32) being defined by a surface which is essentially parallel to the said plane (P) in the areas (A1,A2) where the said surface joins each of the said forward facing surfaces (34,36) the obstacle (28) also having two lateral walls (38,40) for which the so called lateral surfaces are essentially parallel to the plane of symmetry (P) in the areas (B1,B2) where each of them joins the corresponding forward facing surface.

2. Fluidics oscillator in accordance with claim 1, in which the surface of the cavity (32) is shaped in order to guide the fluid jet into the said cavity and prevent the problems associated with re-circulation in the cavity.

3. Fluidics oscillator in accordance with the claim 1 or 2, in which the surface of the cavity (32) has a semi-circular profile in the plane of oscillation of the fluid jet.

4. Fluidics oscillator in accordance with the claim 1 or 2, in which the surface of the cavity (32) has an essentially parabolic profile in the plane of oscillation of the fluid jet.

5. Fluidics oscillator in accordance with one of the claims 1 to 4, comprising an oscillation chamber (26) connected to the fluid entry port (22) and in which the obstacle is located, the said chamber (26) having walls (26c,26d) which are located towards the forward facing surfaces, on both sides of the fluid entry port (22), and for which the walls are essentially parallel to the said forward facing surfaces.

6. Fluidics oscillator in accordance with one of the claims 1 to 5 in which the obstacle (28) has a so called rear wall (42) defined by a so called rear surface, which is essentially perpendicular to the longitudinal symmetry plane (P).

7. Fluidics oscillator in accordance with the claim 5, in which the obstacle (28) occupies the major part of the oscillation chamber (26).

8. Fluidics oscillator in accordance with the claims 1 to 7, in which the cavity (32) has an end which is the furthest from the fluid entry port (22) by a transverse dimension d, and is located at a distance of between 4 and 8d.

9. Fluidics oscillator in accordance with one of the claims 1 to 8, in which the transverse dimension of the cavity (32) is comprised between 2.5 and 6.5 d, where d is the transverse dimension of the fluid entry port (22).

10. Fluidics oscillator in accordance with one of the claims 1 to 9, in which the forward facing surfaces (34,36) are located at a longitudinal distance from the fluid entry port (22) by a transverse dimension d comprised between 2.25 and 6.25 d.

11. Fluidics oscillator in accordance with one of the claims 1 to 10 in which the longitudinal dimension between the part of the cavity (32) which is the furthest from the fluid entry port (22) and a so called rear wall (42) of the obstacle is comprised between 0,05 and 2 d, where d is the transverse dimension of the fluid port (22).

12. Fluidics oscillator in accordance with one of the claims 1 to 11, in which the forward facing surfaces (34,36) have a transverse dimension comprised between 0.25 and 5 d, where d is the transverse dimension of the opening of the fluid entry port (22).

## Patentansprüche

1. Fluidoszillator (20), der in Bezug auf eine Längssymmetriebene (P) symmetrisch angeordnet ist. Er umfasst eine Öffnung für den Flüssigkeitseintritt (22), die einen zweidimensionalen Flüssigkeitsstrahl bilden kann, der sich, bezogen auf die Symmetrieebene (P), quer hin- und herbewegt, ein Hindernis (28) mit einer Vertiefung (32), die sich auf der gegenüberliegenden Seite der genannten Öffnung für den Flüssigkeitseintritt (22) befindet und die von dem sich bewegenden Strahl überspült wird. Das Hindernis (28) besitzt eine Stirnwand (30) mit zwei sogenannten Frontflächen (34,36), die im wesentlichen eben sind und die Vertiefung (32) einrahmen. Die Ebene jeder Fläche liegt etwa senkrecht zur Symmetrieebene (P) . Die genannte Vertiefung (32) wird durch eine Fläche definiert, die etwa parallel zur genannten Ebene (P) liegt, in den Bereichen (A1, A2), wo die genannte Fläche auf jede der aufgeführten Frontflächen (34, 36) trifft. Das Hindernis (28) hat außerdem zwei Seitenwände (38, 40), deren sogenannte Seitenflächen etwa parallel zur Symmetrieebene (P) liegen, in den Bereichen (B1, B2), wo jede der genannten Flächen auf die entsprechende Frontfläche trifft.

2. Fluidoszillator nach Anspruch 1, bei dem die Fläche der Vertiefung (32) profiliert ist, um den Flüssigkeitsstrahl in die genannte Vertiefung zu leiten und die Bildung eines Rücklaufs in diese Vertiefung zu verhindern.

3. Fluidoszillator nach Anspruch 1 oder 2, bei dem die Fläche der Vertiefung (32) in der Oszillationsebene des Flüssigkeitsstrahls ein halbrundes Profil hat.

4. Fluidoszillator nach Anspruch 1 oder 2, bei dem die Fläche der Vertiefung (32) in der Oszillationsebene des Flüssigkeitsstrahls ein etwa parabelförmiges Profil hat.

5. Fluidoszillator nach einem der Ansprüche 1 bis 4. Er umfasst eine Oszillationskammer (26), die mit einer Öffnung für den Flüssigkeitseintritt (22) verbunden ist und in der sich das Hindernis (28) befindet. Die Wände (26c, 26d) dieser Kammer (26) befinden sich auf der gegenüberliegenden Seite der Frontflächen, auf der einen und anderen Seite der genannten Öffnung für den Flüssigkeitseintritt (22). Die Flächen der Kammer liegen etwa parallel zu den genannten Frontflächen.

6. Fluidoszillator nach einem der Ansprüche 1 bis 5, bei dem das Hindernis (28) eine sogenannte Rückwand (42) hat, die durch eine sogenannte Rückfläche definiert ist, die etwa senkrecht zur Symmetrieebene (P) liegt.

7. Fluidoszillator nach Anspruch 5, bei dem das Hindernis (28) den größten Teil der Oszillationskammer (26) einnimmt.

8. Fluidoszillator nach einem der Ansprüche 1 bis 7, bei dem die Vertiefung (32) einen Teil besitzt, der am weitesten von der Öffnung für den Flüssigkeitseintritt (22) entfernt ist, mit einem Quermaß d. Dieser Teil liegt zwischen 4 und 8d von der Öffnung entfernt.

9. Fluidoszillator nach einem der Ansprüche 1 bis 8, bei dem das Quermaß der Vertiefung (32) zwischen 2,5 und 6,5d liegt, wobei d das Quermaß der Öffnung für den Flüssigkeitseintritt (22) ist.

10. Fluidoszillator nach einem der Ansprüche 1 bis 9, bei dem die Frontflächen (34, 36) sich in Längsrichtung zu der Öffnung für den Flüssigkeitseintritt (22) befinden, mit einem Quermaß d zwischen 2,25 und 6,25d.

11. Fluidoszillator nach einem der Ansprüche 1 bis 10, bei dem das Längsmaß zwischen dem Teil der Vertiefung (32), der am weitesten von der Öffnung für den Flüssigkeitseintritt (22) und einer sogenannten Rückwand (42) des Hindernisses entfernt ist, zwischen 0,05 und 2d liegt, wobei d das Quermaß der Öffnung für den Flüssigkeitseintritt (22) ist.

12. Fluidoszillator nach einem der Ansprüche 1 bis 12, bei dem die Frontflächen (34, 36) ein Quermaß haben, das zwischen 0,25 und 5d liegt, wobei d das Quermaß der Öffnung für den Flüssigkeitseintritt (22) ist.
